# EUROPÄISCHE PATENTSCHRIFT

(11) **EP 1 798 460 B1**
(45) Veröffentlichungstag und Bekanntmachung des Hinweises auf die Patenterteilung: **24.02.2010**
(21) Anmeldenummer: 06125122.9
(22) Anmeldetag: 30.11.2006
(51) Int. Cl.: F16L 37/56, F16L 39/00

(54) **Mehrfach-Kupplung für Medienleitungen**
multiple connector for fluid conduits
Connecteur multiple pour conduites de fluide

(30) Priorität: 16.12.2005 DE 202005019650 U
(43) Veröffentlichungstag der Anmeldung: 20.06.2007
(73) Patentinhaber: Voss Automotive GmbH, 51688 Wipperfürth (DE)
(72) Erfinder: Lechner, Martin, 51789 Lindlar (DE); Brandt, Josef, 51688 Wipperfürth (DE)
(74) Vertreter: Patentanwälte Dr. Solf & Zapf

(56) Entgegenhaltungen:
- DE-U- 7 421 926
- DE-U1- 8 908 944
- US-A- 4 080 752
- US-A- 4 782 852

## Beschreibung

Die vorliegende Erfindung betrifft eine Mehrfach-Kupplung für Medienleitungen, mit (mindestens) einem plattenartigen Kupplungsteil, das mehrere (d. h. mindestens zwei) Aufnahmen zur fixierten Halterung von jeweils einem Steckkupplungsteil derart aufweist, dass die Steckkupplungsteile mittels des Kupplungsteils paarweise mit korrespondierenden Gegen-Steckkupplungsteilen durch Steckverbinden kuppelbar sind.

Solche Mehrfach-Kupplungen (vgl. dazu beispielsweise die Veröffentlichungen DE 74 21 926 U, DE 89 08 944 U1, DE 89 04 141 U1, US 3 779 584 oder EP 0 618 393 B1) haben den Vorteil, dass mittels des gemeinsamen Kupplungsteils mehrere Steckkupplungen gleichzeitig in einem gemeinsamen Kupplungsvorgang gekuppelt werden können.

Die letztgenannte Veröffentlichung EP 0 618 393 B1 beschreibt eine Kupplungseinrichtung zur Leitungsdurchführung im Bereich einer Montagewandung (sog. Schottwand) in einem Kraftfahrzeug. Vor allem bei solchen Anwendungen tritt häufig das Problem auf, dass am Montageort im Fahrzeug, insbesondere im Motorraum, bedingt durch andere benachbarte Bauteile nur wenig Platz zur Verfügung steht, was die Montage und das Kuppeln erschwert, zumal dies mit an den Steckkupplungsteilen angeschlossenen Schlauchleitungen erfolgen muß. Dieses Problem wird um so größer, je mehr Steckkupplungsteile mit angeschlossenen Leitungen vorhanden sind.

Der vorliegenden Erfindung liegt die Aufgabe zugrunde, eine Mehrfach-Kupplung der genannten Art zu schaffen, die unter Beibehaltung der Vorteile bekannter Ausführungen auch bei engen Platzverhältnissen eine vereinfache Montage ermöglicht.

Erfindungsgemäß wird dies dadurch erreicht, dass das Kupplungsteil mehrteilig aus mindestens zwei - vorzugsweise identischen - Formteilen ausgebildet ist, die jeweils eine Teilmenge der vorhandenen Aufnahmen für die Steckkupplungsteile aufweisen und im entkuppelten Zustand von einander getrennt oder trennbar sind.

Durch die in mindestens zwei Teile getrennte Ausbildung des plattenartigen Kupplungsteils können die darin gehalterten Steckkupplungsteile mit den angeschlossenen Leitungen besser und auch bei engen Raumverhältnissen gehandhabt werden, indem sie aus unterschiedlichen Richtungen, z. B. beidseitig an bestimmten anderen Bauteilen vorbei, zugeführt und dann mit den ortsfest (insbesondere fahrzeugseitig) gehalterten Gegen-Steckkupplungsteilen durch Steckverbinden gekuppelt werden können. Im gekuppelten Zustand liegen dann die Formteile des Kupplungsteils in einer gemeinsamen Ebene nebeneinander und können auf geeignete Weise fixiert werden. Vorzugsweise werden dazu Schrauben verwendet, die Durchführöffnungen der Formteile durchgreifen und in Gewindelöcher auf der Seite eines die Gegen-Steckkupplungsteile aufweisenden Gegen-Kupplungsteils eingreifen. Das Gegen-Kupplungsteil kann unmittelbar von einem Aggregat, z. B. einer Druckmittelquelle, gebildet oder aber plattenartig und dabei vorzugsweise gleichartig wie das erfindungsgemäße Kupplungsteil ausgebildet sein. Durch eine bevorzugt identische Ausgestaltung der Formteile können diese insbesondere als Kunststoff-Spritzgussteile auf sehr kostengünstige Weise in ein und dem selben Formwerkzeug hergestellt werden.

Weitere vorteilhafte Ausgestaltungen der Erfindung sind in den abhängigen Ansprüchen und der folgenden Beschreibung enthalten.

Anhand eines in der Zeichnung veranschaulichten, bevorzugten Ausführungsbeispiels soll die Erfindung genauer erläutert werden. Dabei zeigen:
- Fig. 1: eine Perspektivansicht eines erfindungsgemäßen, mit beispielhaft vier Steckkupplungsteilen bestückten Kupplungsteils (im entkuppelten Zustand und ohne Leitungen),
- Fig. 2 a und b: das Kupplungsteil nach Fig. 1 in einem voneinander getrennten Zustand der beiden Formteile,
- Fig. 3: eine vergrößerte Draufsicht in Pfeilrichtung III gemäß Fig. 1,
- Fig. 4: einen Schnitt in der Ebene A-A gemäß Fig. 3 und
- Fig. 5: einen Schnitt in der Ebene B-B gemäß Fig. 3.

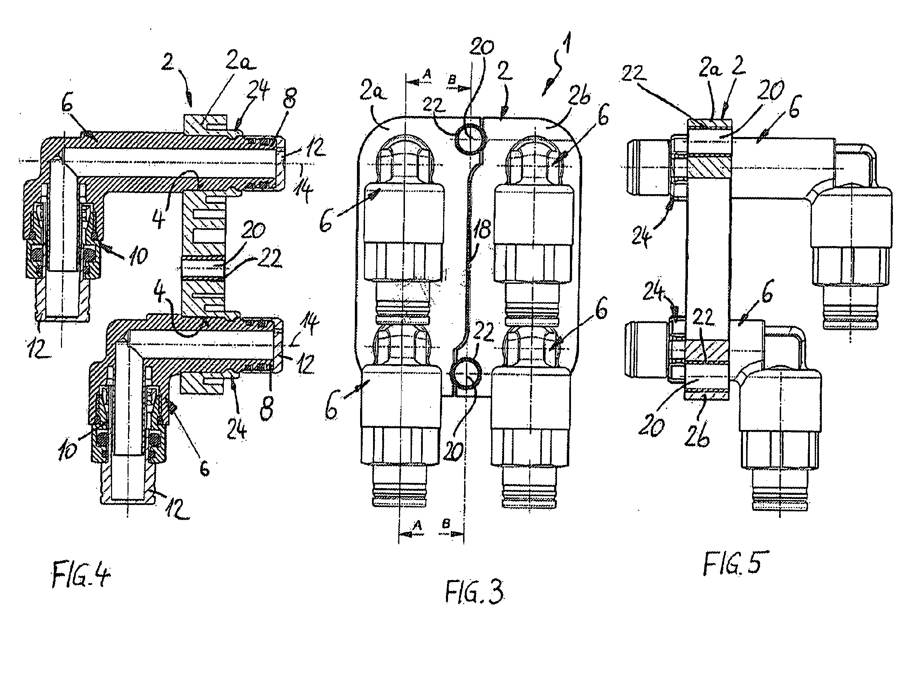

Eine erfindungsgemäße Mehrfach-Kupplung 1 weist ein plattenartiges Kupplungsteil 2 auf, welches seinerseits mehrere, im dargestellten Ausführungsbeispiel vier Aufnahmen 4 (siehe den Schnitt in Fig. 4) zur fixierten Halterung von jeweils einem Steckkupplungsteil 6 derart aufweist, dass die Steckkupplungsteile 6 mittels des Kupplungsteils 2 paarweise mit nicht dargestellten korrespondierenden Gegen-Steckkupplungsteilen kuppelbar sind. Im dargestellten Beispiel sind die Steckkupplungsteile 6 als Winkelstecker ausgebildet, die auf einer Kupplungsseite jeweils einen Steckerschaft 8 und gegenüberliegend eine Anschlusseinrichtung 10 zum Anschluss einer nicht dargestellten Medienleitung aufweisen. In Fig. 4 ist ein Vormontagezustand veranschaulicht, wobei beidseitig lösbare Schutzkappen 12 vorgesehen sind. Die Steckerschäfte 8 aller Steckkupplungsteile 6 sind bezüglich ihrer Steckachsen 14 parallel zueinander angeordnet und überragen das plattenartige Kupplungsteil (Kupplungsplatte) 2 in Richtung der Kupplungsseite, um mit den Gegen-Steckkupplungsteilen steckverbunden werden zu können.

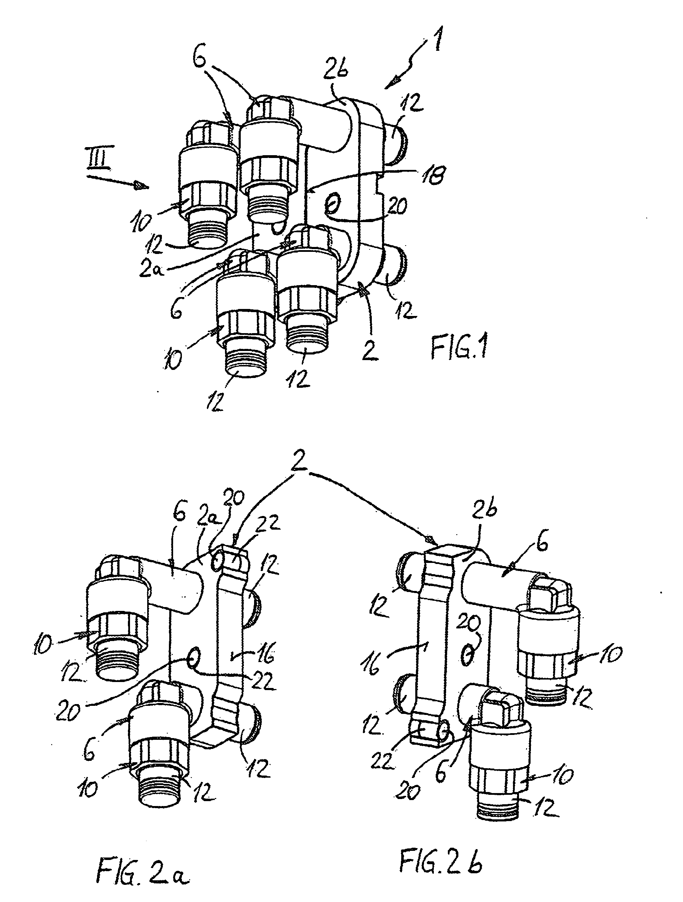

Erfindungsgemäß ist das Kupplungsteil 2 mehrteilig, im dargestellten Beispiel aus zwei identischen Formteilen 2a und 2b ausgebildet, die jeweils eine Teilmenge der vorhandenen Aufnahmen 4 für die Steckkupplungsteile 6 aufweisen, und die gemäß Fig. 2a, 2b im entkuppelten Zustand getrennt handhabbar sind. Durch die identische Ausgestaltung der Formteile 2a, 2b sind diese zur Halterung jeweils der Hälfte der vorhandenen Steckkupplungsteile 6 ausgelegt, im dargestellten Beispiel für je zwei Steckkupplungsteile 6.

Gemäß Fig. 1 und 3 liegen die Formteile 2a, 2b im gekuppelten Zustand in einer Ebene und sind mit Seitenrändern 16 (siehe Fig. 2a, 2b) entlang einer Trennlinie 18 (Fig. 1 und 3) benachbart.

Das Kupplungsteil 2 weist Durchführöffnungen 20 für nicht dargestellte Schrauben auf, mit denen zur Sicherung des gekuppelten Zustands das Kupplungsteil 2 mit einem zweiten, die korrespondierenden Gegen-Steckkupplungsteile aufweisenden Kupplungsteil verschraubt werden kann. Wie sich dabei insbesondere aus Fig. 3 ergibt, sind bevorzugt zwei der Durchführöffnungen 20 derart im Bereich der Trennlinie 18 angeordnet, dass die jeweilige Schraube mit einem Schraubenkopf anteilig Flächenbereiche von beiden benachbarten Formteilen 2a und 2b überdeckt. Gemäß Fig. 1 und 2a, b weist jedes Formteil 2a, 2b vorzugsweise in seinem etwa mittigen Flächenbereich eine weitere Durchführöffnung 20 auf.

Zweckmäßig bestehen die beiden Formteile 2a, 2b aus Kunststoff, wobei vorzugsweise im Bereich jeder Schrauben-Durchführöffnung 20 eine Metallhülse 22 derart eingesetzt ist, dass eine Anzugskraft beim Verschrauben hauptsächlich von der Metallhülse 22 aufgenommen wird. Dadurch wird das umliegende Kunststoffmaterial von einer zu starken Komprimierung durch die Schraube geschützt.

Ergänzend sei noch bemerkt, dass jedes Steckkupplungsteil 6 innerhalb der zugehörigen Aufnahme 4 über Rastmittel 24 fixiert ist, wobei diese Rastmittel 24 im gekuppelten Zustand selbsttätig formschlüssig verriegelt werden. Einzelheiten zu dieser Ausgestaltung sind in der EP 0 618 393 B1 enthalten, auf die deshalb an dieser Stelle in vollem Umfange Bezug genommen wird.

## Patentansprüche

1. Mehrfach-Kupplung (1) für Medienleitungen, mit einem plattenartigen Kupplungsteil (2), das mehrere Aufnahmen (4) zur fixierten Halterung von jeweils einem Steckkupplungsteil (6) derart aufweist, dass die Steckkupplungsteile (6) paarweise mit korrespondierenden Gegen-Steckkupplungsteilen durch Steckverbinden kuppelbar sind,
**dadurch gekennzeichnet, dass** das plattenartige Kupplungsteil (2) mehrteilig aus mindestens zwei Formteilen (2a, 2b) ausgebildet ist, die jeweils eine Teilmenge der vorhandenen Aufnahmen (4) für die Steckkupplungsteile (6) aufweisen, und die im gekuppelten Zustand in einer Ebene liegend jeweils mit Seitenrändem (16) entlang einer Trennlinie (18) benachbart und im entkuppelten Zustand voneinander getrennt oder trennbar sind.

2. Mehrfach-Kupplung nach Anspruch 1,
**dadurch gekennzeichnet, dass** die Formteile (2a, 2b) identisch ausgebildet sind.

3. Mehrfach-Kupplung nach Anspruch 1 oder 2,
**dadurch gekennzeichnet, dass** das Kupplungsteil (2) Durchführöffnungen (20) für Schrauben aufweist.

4. Mehrfach-Kupplung nach Anspruch 1 und 3,
**dadurch gekennzeichnet, dass** mindestens eine der Durchführöffnungen (20) derart im Bereich der Trennlinie (18) angeordnet ist, dass eine zur Befestigung durch die Durchführöffnung (20) geführte Schraube mit einem Schraubenkopf anteilig Flächenbereiche der benachbarten Formteile (2a, 2b) überdeckt.

5. Mehrfach-Kupplung nach einem der Ansprüche 1 bis 4,
**dadurch gekennzeichnet, dass** die Formteile (2a, 2b) des Kupplungsteils (2) aus Kunststoff bestehen, wobei vorzugweise im Bereich jeder Schrauben-Durchführöffnung (20) eine Metallhülse (22) eingesetzt ist.

## Claims

1. A multiple coupling (1) for media lines, with a plate-like coupling part (2) which has a plurality of receiving means (4) for holding one plug-in coupling part (6) in a fixed manner in each case in such a way that the plug-in coupling parts (6) are capable of being coupled in pairs to corresponding matching plug-in coupling parts by plug-in connexion, **characterized in that** the plate-like coupling part (2) is formed in a plurality of parts from at least two shaped parts (2a, 2b) which in each case have a subset of the available receiving means (4) for the plug-in coupling parts (6) and which in the coupled state are adjacent in one plane with lateral edges (16) situated along a separation line (18) in each case and in the uncoupled state are separated or are capable of being separated from each other.

2. A multiple coupling according to Claim 1, **characterized in that** the shaped parts (2a, 2b) are designed in an identical manner.

3. A multiple coupling according to Claim 1 or 2, **characterized in that** the coupling part (2) has through-openings (20) for bolts.

4. A multiple coupling according to Claims 1 and 3, **characterized in that** at least one of the through-openings (20) is arranged in the region of the separation line (18) in such a way that a bolt passed through the through-opening (20) for fastening purposes covers surface regions of the adjacent shaped parts (2a, 2b) with a bolt head on a proportional basis.

5. A multiple coupling according to any one of Claims 1 to 4, **characterized in that** the shaped parts (2a, 2b) of the coupling part (2) consist of plastics material, wherein a metallic sleeve (22) is preferably inserted in the region of each bolt through-opening (20).

## Revendications

1. Raccord multiple (1) pour des conduites de fluide, comportant un élément de couplage (2) en forme de plaque, qui comporte plusieurs logements (4) pour la fixation bloquée respective d'un élément de couplage enfichable (6), de telle sorte que les éléments de couplage enfichables (6) peuvent être couplés par paires par un assemblage enfiché avec des éléments de couplage enfichables complémentaires correspondants, **caractérisé en ce que** l'élément de couplage (2) en forme de plaque est réalisé en plusieurs parties avec au moins deux parties profilées (2a, 2b) qui comportent chacune une partie du nombre de logements (4) disponibles pour les éléments de couplage enfichables (6), et qui, dans la position accouplée, sont situées dans un plan, chacun de manière adjacente à des bords latéraux (16) le long d'une ligne de séparation (18) et, dans la position découplée, sont séparées ou peuvent être séparées l'une de l'autre.

2. Raccord multiple selon la revendication 1,
**caractérisé en ce que** les parties profilées (2a, 2b) sont réalisées de manière identique.

3. Raccord multiple selon la revendication 1 ou 2,
**caractérisé en ce que** l'élément de couplage (2) comporte des trous débouchants (20) pour des vis.

4. Raccord multiple selon les revendications 1 et 3,
**caractérisé en ce qu'**au moins un des trous débouchants (20) est disposé dans la zone de la ligne de séparation (18) de telle sorte qu'une vis, guidée à travers le trou débouchant (20) pour la fixation, recouvre avec une tête de vis proportionnellement des zones de surface des parties profilées (2a, 2b) adjacentes.

5. Raccord multiple selon l'une quelconque des revendications 1 à 4,
**caractérisé en ce que** les parties profilées (2a, 2b) de l'élément de couplage (2) sont réalisées en matière plastique, sachant que, de préférence, une douille métallique (22) est insérée dans la zone de chaque trou débouchant (20) pour les vis.
